**Europäisches Patentamt**

**European Patent Office**

**Office européen des brevets**

(11) Veröffentlichungsnummer: **0 215 333 B1**

(12) **EUROPÄISCHE PATENTSCHRIFT**

(45) Veröffentlichungstag der Patentschrift:
25.10.89

(21) Anmeldenummer: 86111623.4

(22) Anmeldetag: 22.08.86

(51) Int. Cl.⁴: **C09J 3/14**, C08L 51/04,
C08L 53/02

(54) Siegelfähige thermoplastische Formmasse.

(30) Priorität: 30.08.85 DE 3531036

(43) Veröffentlichungstag der Anmeldung:
25.03.87 Patentblatt 87/13

(45) Bekanntmachung des Hinweises auf die Patenterteilung:
25.10.89 Patentblatt 89/43

(84) Benannte Vertragsstaaten:
AT BE CH DE FR GB IT LI NL SE

(56) Entgegenhaltungen:
DE-A- 2 343 870
US-A- 4 032 492

(73) Patentinhaber: BASF Aktiengesellschaft,
Carl-Bosch-Strasse 38, D-6700 Ludwigshafen(DE)

(72) Erfinder: Jenne, Helmut, Dr., Grosser Moench 6,
D-6905 Schriesheim(DE)
Erfinder: Kress, Gerhard, Dr., Liebermannstrasse 7,
D-6700 Ludwigshafen(DE)

ACTORUM AG

## Beschreibung

Die Erfindung betrifft eine heißsiegelfähige thermoplastische Formmasse auf Basis eines Polystyrolharzes.

Zum Stand der Technik nennen wir die DE-OS 32 48 746.

In dieser Schrift sind Formmassen auf Basis von Polystyrolharzen, Blockcopolymerisaten und Schmiermitteln beschrieben. Sie werden zur Herstellung von transparenten Verpackungsmitteln verwendet.

Kunststoffbehälter für die Verpackung von Lebensmitteln müssen in vielen Fällen luftdicht verschlossen werden, um deren Haltbarkeit sicherzustellen. Als Verschluß werden in vielen Fällen, insbesondere bei Verpackung von Molkereiprodukten, Aluminiumfolien verwendet, auf die ein Siegellack aufgetragen wird, der eine ausreichende Haftung auf den verschiedenen Arten von Kunststoffbehältern sicherstellt. Da Aluminium unempfindlich gegenüber Temperatureinflüssen ist, kann der Siegelvorgang bei beliebigen Temperaturen durchgeführt werden. Es ist lediglich darauf zu achten, daß die Siegelung so beschaffen ist, daß einerseits das Behältnis fest genug verschlossen ist, also z.B. beim Herabfallen des gefüllten Behälters nicht aufplatzt, andererseits aber der Verschluß auch noch leicht von Hand zu öffnen ist, so daß die Folie nicht zerreißt. Dabei ist von Bedeutung, daß die Siegelung über einen gewissen Verarbeitungsbereich, wie er von den handelsüblichen Verschließanlagen gefordert wird, diese Festigkeitsanforderung erfüllt.

Außerdem werden auch Kunststoff-Folien verwendet, die ebenfalls mit einem siegelfähigen Lack versehen werden. Je nach der Art des Kunststoffes, aus dem der zu siegelnde Behälter hergestellt ist, verwendet man entsprechende Siegellacke. So bringt man z.B. auf die derzeit für diesen Zweck am meisten verwendeten siegelfähigen Folien aus Hart-PVC eine Siegellackschicht auf Basis eines Acrylatharzes auf, dem zur Regulierung der Haftfestigkeit und des Aufschmelzpunktes noch Zusatzstoffe beigegeben werden.

Die siegelfähigen Kunststoff-Folien können im Gegensatz zu den Alufolien auch thermogeformt werden. So ist es möglich, bei Verwendung von Kunststoffolien daraus geformte Deckel herzustellen, die ebenfalls auf das zu verschließende Behältnis aufgesiegelt werden, die aber nach Öffnen der Verpackung geeignet sind, diese wieder nach Entnahme eines Teiles des Inhaltes zur weiteren Aufbewahrung zu verschließen.

Die derzeit verwendeten siegelfähigen Folien aus PVC haben jedoch einige Nachteile: Sie sind, da sie mit einem Siegellack zu versehen sind, verhältnismäßig teuer. Zudem sind die von der Siegelschicht herrührenden Restlösungsmittel aus dem Kunststoff nur mit erheblichem Aufwand zu entfernen. Dazu kommt, daß aus Gründen des Umweltschutzes in einigen Ländern zunehmend die Neigung beteht, PVC für Wegwerfverpackungen durch andere Thermoplaste zu ersetzen.

So wird schon seit Jahren versucht, heißsiegelfähige Folien aus Polystyrol herzustellen. Dies ist insbesondere daran gescheitert, daß es mit den bekannten Klebern nicht gelang, Siegelbedingungen einzuhalten, die die Polystyrolfolie nicht schädigen. Stets muß die Polystyrolfolie im Siegelbereich so stark erhitzt werden, daß sie dort erweicht und unter dem zur Siegelung notwendigen Druck wegfließt. Sie wird dann im Siegelbereich so dünn, daß sie schon bei geringer Belastung reißt und ein einwandfreies Öffnen der Verpackung nicht mehr möglich ist.

Es bestand daher die Aufgabe, eine heißsiegelfähige Formmasse zu entwickeln, die eine Siegelung unter solchen physikalischen Bedingungen ermöglicht, unter denen ein Wegfließen der Trägerfolien aus dem Siegelbereich nicht mehr möglich ist. Eine solche Formmasse muß insbesondere folgende Eigenschaften erfüllen. Sie muß schon bei sehr tiefen Temperaturen kleben. Die Siegelung muß unabhängig von den Siegelbedingungen eine möglichst gleiche Festigkeit haben und das Öffnen der Packung muß leicht und gleichmäßig erfolgen, ohne daß der Deckel bei diesem Vorgang zerreißt. Zudem soll die Siegelschicht nach Möglichkeit direkt, d.h. ohne Verwendung eines Klebers, auf z.B. einer üblichen Polystyrolträgerfolie haften. Andererseits soll aber auch die Möglichkeit bestehen, sie mittels Kleber auf andere als die Trägerfolie geeignete Substrate zur Herstellung von Siegelfolien aufzubringen. Außerdem soll die Verwendung von Lösungsmitteln zum Aufbringen der Klebeschicht vermieden werden.

Es zeigte sich nun in überraschender Weise, daß die erfindungsgemäße Formmasse der nachstehend noch zu beschreibenden Zusammensetzung diese Anforderungen in ausgezeichneter Weise erfüllt. Sie ermöglicht nicht nur eine Siegelung unter physikalischen Bedingungen, die eine thermische Schädigung des Trägermaterials vermeiden, sondern erfüllt auch die Forderung, über einen weiten Bereich der Verarbeitung ihre Siegelfestigkeit nur in engem Bereich zu verändern und unter diesen Bedingungen ein einwandfreies Öffnen der versiegelten Packung zu ermöglichen. Zudem ist die erfindungsgemäße Formmasse thermoplastisch verarbeitbar und kann ohne Verwendung von Klebern durch Kaschieren oder Coextrusion auf übliche Polystyrol-Trägerfolien aufgebracht werden. So ist es aufgrund dieser Erfindung auch möglich, Lösungsmittel zu vermeiden, so daß deren Entfernen entfallen kann.

Die Erfindung betrifft daher eine siegelfähige thermoplastische Formmasse, die, jeweils bezogen auf die Summe der Bestandteile A, B und C, enthält:

A. 20 bis 80 Gew.-% mindestens eines schlagzähen Polystyrolharzes, das zweiphasig aus einer Hartmatrix und einer Weichphase im Gewichtsverhältnis von 60 bis 95 zu 5 bis 40 besteht,

B. 5 bis 70 Gew.-% mindestens eines Blockcopolymeren aus mindestens einem Block eines vinylaromatischen Monomeren und mindestens einem Block eines konjugierten Diens mit 4 oder 5 C-Atomen,
C. 8 bis 30 Gew.-% mindestens eines niedermolekularen Gleitmittels.

Am Aufbau der erfindungsgemäßen Formmasse sind die Komponenten A, B und C vorzugsweise in folgenden Anteilen, bezogen auf die Formmasse aus A, B und C beteiligt:

Komponente A: 30 bis 70 Gew.-%,
Komponente B: 20 bis 60 Gew.-%,
Komponente C: 8 bis 20 Gew.-%.

Die Formmasse kann zusätzlich noch übliche Zusatzstoffe D enthalten.
Die Komponenten A, B und C der erfindungsgemäßen Formmasse sind jeweils an sich bekannt, ebenso ist deren Herstellung bekannt. Sie sind auch im Handel erhältlich.

Komponente A

Als Komponente A zum Aufbau der erfindungsgemäßen Formmasse kommen schlagzähe Polystyrolharze in Betracht. Darunter sind die zweiphasig aus einer Hartmatrix und einer Weichphase aufgebauten schlagzähen Polystyrole zu verstehen.
Die Hartmatrix der Komponente A ist aus dem Polymeren eines monovinylaromatischen Monomeren aufgebaut. Diese Hartmatrix macht, bezogen auf die Komponente A, 60 bis 95 Gew.-%, vorzugsweise 80 bis 95 Gew.-%, aus. Als vinylaromatisches Monomeres zum Aufbau der Hartmatrix kommt insbesondere Styrol in Frage. Es können jedoch auch α-Methylstyrol oder p-Methylstyrol oder Mischungen substituierter Styrole verwendet werden; bevorzugt ist jedoch die ausschließliche Verwendung von Styrol, so daß die Hartmatrix bevorzugt aus Polystyrol besteht.
Die Hartmatrix entsteht in an sich bekannter Weise bei der Herstellung der Komponente A dadurch, daß die Weichphase, d.h. die dieser zugrundeliegenden Kautschuke, z.B. Polydiene und z.B. lineare Zweiblockcopolymerisate aus Dienen oder Gemische davon in Gegenwart des die Hartmatrix später aufbauenden Monomeren thermisch oder radikalisch initiiert polymerisiert wird. Dabei bilden sich die Pfropfmischpolymerisate der Kautschuke (Weichphase) und der ungepfropfte Teil, die Hartmatrix. Die Hartmatrix kann Viskositätszahlen im Bereich von 50 bis 140, insbesondere im Bereich von 70 bis 120, aufweisen. Dies entspricht mittleren Molgewichten ($\overline{M}_w$) im Bereich von 100.000 bis 350.000, insbesondere 150.000 bis 300.000.
Die Weichphase liegt fein dispergiert in der Hartmatrix vor. Die Art und Weise, wie eine Weichphase in einer Hartmatrix dispergiert werden kann, ist dem Fachmann geläufig. Die Weichphase ist in einem Anteil von 5 bis 40 Gew.-%, vorzugsweise von 5 bis 20 Gew.-%, in der Hartmatrix vorhanden. Sie weist eine mittlere Teilchengröße im Bereich von 0,01 bis 20 µm, vorzugsweise im Bereich von 0,3 bis 10 µm auf. Bei dem genannten Teilchengrößenbereich handelt es sich um die mittlere Teilchengröße, bestimmt durch Auszählen einer Elmi-Aufnahme (Zahlenmittel).
Bei der Weichphase handelt es sich somit um ein Pfropfmischpolymerisat aus dem(n) Monomeren der Hartmatrix, d.g. insbesondere von Styrol, auf Kautschuke bzw. Gemische von Kautschuken, z.B. ein Gemisch aus einem elastomeren linearen Styrol-Butadien-Zwei-Blockcopolymeren A-B und Polybutadien.
Als eine vorzugsweise die Weichphase aufbauende Komponente ist z.B. Polybutadien bzw. dessen Pfropfmischpolymerisat mit vorzugsweise Styrol zu nennen. Als Grundlage der Pfropfung sind allgemein Polymere mit 4 bis 5 C-Atomen zu nennen. Besonders Polybutadiene sind geeignet vom mediumoder high-cis-Typ mit Molukulargewichten im Bereich von 70.000 bis 450.000 (Gewichtsmittel). Vorzugsweise werden medium-cis-Polybutadiene mit Molgewichten von 300.000 bis 400.000 eingesetzt.
Als weitere, die Weichphase aufbauende Komponente kann ein lineares Zweiblockcopolymerisat A-B bzw. dessen Pfropfmischpolymerisat mit Styrol fungieren.
Als elastomeres lineares Zwei-Blockcopolymerisat A-B wird ein solches verstanden, das durch anionische Polymerisation mit Hilfe von Lithiuminitiatoren hergestellt worden ist. Als vinylaromatische Monomere zum Aufbau des Blockes A kommen Styrol und substituierte Styrole in Betracht. Genannt seien Styrol, das bevorzugt alleine verwendet wird, o-, m- und p-Methylstyrol. Der Block B des Blockcopolymerisats ist vorzugsweise nur aus Butadien aufgebaut.
Das Zweiblockcopolymerisat kann z.B. einen Blockpolystyrolgehalt von 40 bis 90 Gew.-%, bezogen auf das Blockcopolymerisat, aufweisen (Rest jeweils Butadien). Es handelt sich bei dem genannten Blockcopolymerisat um ein solches mit sogenanntem scharfem Übergang. Dem Fachmann ist z.B. aus A. Echte, Angew. Makr. Chemie 58/59 175 (1977) bekannt, wie er derartige Blockcopolymerisate herstellen kann. Dieses Blockcopolymerisat soll ein mittleres Molukulargewicht ($\overline{M}_w$) von 100.000 bis 300.000, vorzugsweise von 150.000 bis 250.000, aufweisen.
Falls Gemische aus Polydienen und linearen Blockcopolymerisaten als Kautschuke angewendet werden, berechnet sich der Gesamtpolydienanteil aus dem Anteil z.B. des Polybutadiens und z.B. aus dem Butadienanteils der in dem Zwei-Blockcopolymerisat enthalten ist. Dieser Gesamtpolydienanteil soll, bezogen auf die Komponente A im Bereich von 2 bis 30 Gew.-%, vorzugsweise 4 bis 15 Gew.-%, liegen.

Um dies zu verdeutlichen, sei ein Beispiel angeführt. Eine Mischung aus 8 Gew.-% Styrol-Butadienzweiblockcopolymerisat mit einem Butadiengehalt von 50 Gew.-% und 6 Gew.-% Homo-Polybutadien werde angewendet. Der Gesamtpolybutadienanteil beträgt dann 8 x 0,5 = 4 Gew.-% Polybutadien aus dem Zweiblockcopolymerisat und 6 Gew.-% aus dem Homopolymerisat des Butadiens, so daß der Gesamtpolybutadienanteil 10 Gew.-% ausmacht.

Besonders bevorzugt werden schlagfeste Polystyrolharze, die nach den in der DE-AS 17 70 392 beschriebenen Verfahren hergestellt werden, oder solche, die besonders gute Spannungsrißbeständigkeit aufweisen (vgl. Verfahren gemäß DE-AS 25 25 019). Auch die Verwendung schlagfester Polystyrole mit transluzenten Eigenschaften, wie sie z.B. in der DE-AS 26 13 352 beschrieben sind, ist möglich.

Selbstverständlich kann man aber auch Styrol-Butadienpfropfcopolymere mit niedrigerem Butadienanteil z.B. unter 40 Gew.-% oder schließlich nur Styrol-Homopolymerisat verwenden. Man kann durch einen erhöhten Anteil an Styrol-Butadien-Blockcopolymer ebenfalls noch zu verwendbaren Siegelschichten kommen. Dieser Weg ist aber teurer.

Der Anteil der schlagfesten Polystyrolharzes A in der Formmasse der vorliegenden Erfindung liegt zwar bevorzugt im Bereich von 30 bis 60 Gew.-%; je nach Art des verwendeten Harzes kann dieser Anteil jedoch auf 20 Gew.-% abgesenkt oder bis auf 80 Gew.-% angehoben werden.

Komponente B

Die Komponente B ist ein Blockcopolymeres, aufgebaut aus mindestens einem Block eines vinylaromatischen Monomeren, insbesondere aus der Gruppe von Styrol, $\alpha$-Methylstyrol, kernalkylierten Styrolen, wie p-Methylstyrol oder den Mischungen hieraus und mindestens einem Block eines konjugierten Diens mit 4 oder 5 C-Atomen, aus der Gruppe von Butadien und Isopren oder Gemischen davon.

Das Blockcopolymere kann aus nur 2 Blöcken bestehen, es kann linear oder verzweigt aufgebaut sein. Beispielsweise sind derartige Produkte und Verfahren zu deren Herstellung beschrieben in: DE-AS 10 84 919, DE-AS 16 45 406, DE-AS 14 20 698, US-PS 30 30 364.

Verzweigte Produkte sind aus DE-AS 19 34 348, DE-AS 19 59 922 bzw. DE-AS 25 50 227 bekannt.

Auch Verfahren zur Herstellung verzweigter Blockcopolymerisate sind in den genannten Schriften bzw. in DE-OS 32 48 746 beschrieben.

Zusammenfassend läßt sich daher feststellen. Bevorzugt werden die Styrol-Butadien-Blockcopolymerisate mit scharfem bzw. verschmiertem Übergang (vgl. Echte loc.cit.).

Als Styrol-Butadien-Block-Copolymeres kann dabei jedes Blockcopolymere ohne Einschränkung auf seinen Aufbau eingesetzt werden, sofern seine Herstellung nach dem anionischen Lösungspolymerisationsverfahren mit einer Alkyl-Lithium-Verbindung als Katalysator erfolgt. Dabei können sowohl elastomere Styrol-Butadien-Blockcopolyere als auch harzartige Styrol-Butadien-Blockcopolymere mit einem Butadienanteil 50 Gew.-% verwendet werden. Verwendet man elastomere Styrol-Butadien-Blockcopolymere mit einem Butadien-Anteil über 50 Gew.-%, so liegt deren Anteil im Gemisch, bevorzugt zwischen 20 und 40 Gew.-%, kann jedoch, je nach Anforderungen, auch höher oder niedriger sein.

Harzartige Styrol-Butadien-Blockcopolymere mit Styrolgehalten größer als 50 Gew.-%, insbesondere 65 bis 95 Gew.-%, sollen bevorzugt in einer Menge von 40 bis 60 Gew.-% in der erfindungsgemäßen Formmasse enthalten sein.

Komponente C

Als Gleitmittel lassen sich prinzipiell alle niedermolekularen Stoffe verwenden, die in der erforderlichen Menge mit den Komponenten A+B in der Formmasse verträglich sind. Hierzu zählen z.B. Mineralöle, aromatische oder aliphatische Alkohole oder Ester, wie Dodecylalkohol, Butylstearat, Di-ethylhexylphthalat usw.

Ferner seien genannt:

Ethylenoxid-Propylenoxid-Blockcopolymerisate

Microhartwachse

Ethylen-bis-Stearylamid (Accrawachs)

Metallseifen, insbesondere der Erdalkalien und des Zinks

Mineralöle auf Basis von insbesondere naphthenischen und paraffinischen Kohlenwasserstoffen (insbesondere die technischen und medizinischen Weißöle)

Silikonöle mit Viskositäten im Bereich von 0,5 bis 50 000 mPas u.dgl.

Komponente D

Die Formmasse kann übliche, von C verschiedene Zusatzstoffe enthalten. Genannt seien z.B. Antistatika, Entformungshilfsmittel, Pigmente, Antioxidantien und Füllstoffe.

Herstellung der Formmasse

Die erfindungsgemäße heißsiegelfähige Formmasse wird durch Mischen der Bestandteile A, B und C in einer Mischvorrichtung gemischt und in einem Misch-Extruder, z.B. einem Bus-Kneter oder einem ZSK-Extruder, homogenisiert und granuliert. Das erhaltene Granulat wird entweder nach dem Folienblasverfahren zu einer etwa 25-75 µm dicken Folie verarbeitet, die anschließend auf die Trägerfolie aufkaschiert wird oder sie wird durch Extrusionskaschieren heiß auf die Trägerfolie laminiert. Wirtschaftlicher ist jedoch die Herstellung der Siegelfolie auf einer Coextrusionsanlage, wobei für die erfindungsgemäßen Gemische alle Methoden der Coextrusion geeignet sind.

Die Herstellung kann auch nach dem in der DE-OS 20 55 891 beschriebenen Verfahren erfolgen, wonach die Komponente C zunächst mit der Komponente B abgemischt wird und in diese Mischung dann die Komponente A eingebracht wird.

Verwendung der Formmasse

Die erfindungsgemäße Formmasse hat insbesondere die Eigenschaft, heißsiegelfähig zu sein. Sie findet daher Verwendung im weitesten Sinne zur Herstellung von Verbunden mit einem Träger, insbesondere einer Trägerfolie.

Als Trägerfolie sind alle thermoplastisch verarbeitbaren Stoffe auf Basis von Styrol- und Butadien geeignet, also schlagfestes Polystyrol, Styrol-Butadien-Blockcopolymere, Mischungen aus Styrol-Homopolymerisaten oder Styrol-Butadien-Pfropfcopolymerisaten mit Styrol-Butadien-Pfropfcopolymerisaten mit Styrol-Butadien-Blockcopolymeren usw. Auf diesen Stoffen haftet die heißsiegelfähige Schicht ohne Kleber.

Als Trägerfolie sind aber auch andere thermoplastisch verarbeitbaren Stoffe auf Basis von Styrol- und Butadien geeignet, also schlagfestes Polystyrol, Styrol-Butadien-Blockcopolymere, Mischungen aus Styrol-Homopolymerisaten oder Styrol-Butadien-Pfropfcopolymerisaten mit Styrol-Butadien-Blockcopolymere usw. Auf diesen Stoffen haftet die heißsiegelfähige Schicht ohne Kleber.

Als Trägerfolien lassen sich aber auch andere Thermoplaste auf Basis vinylaromatischer Verbindungen oder Olefin-Polymere oder Polymere auf Basis von Estern oder Amiden verwenden. In diesen Fällen ist die Heißsiegelschicht jedoch mit Hilfe eines Klebers mit der Trägerfolie zu verbinden.

Durch Verbinden der erfindungsgemäßen Formmasse (in Form einer Folie) mit einer Trägerfolie resultieren Heißsiegelfolien.

Die so entstandenen Heißsiegelfolien werden auf den üblichen, für das Heißsiegeln verwendeten Verschließeinrichtungen auf Behälter aus Styrol-Polymerisaten, z.B. aus Styrolhomopolymerisat, Styrol-Butadien-Pfropf- oder Blockcopolymere oder Mischungen aus demselben aufgesiegelt. Die Siegelbedingungen sind bei vorgegebener Form des Siegelkopfes durch die Temperatur des Siegelkopfes, den Druck während des Schweißvorganges und die Dauer desselben, beschrieben. Die Siegelbedingungen sind stark abhängig von der Dicke der Siegelfolie. Geeignete Siegelbedingungen liegen bei Temperaturen zwischen 160°C und 250°C, einem Druck zwischen 1,0 und 4 atü sowie einer Siegelzeit von 0,4 bis 2,0 sec. Vor dem Heißsiegeln sind die Siegelfolien nach den bekannten Verfahren mit einer Lackschicht zu versehen, um das Kleben der Folie am Siegelkopf zu vermeiden.

Die in den Beispielen und Vergleichsversuchen genannten Parameter wurden wie folgt bestimmt:

1. Siegelbedingungen bei unterschiedlichen Temperaturen des Siegelkopfes in °C, Drücken (atü) und Zeiten (sec). Die Folien wurden auf handelsübliche thermogeformte Verpackungsbecher aus schlagfestem Polystyrol, Butadiengehalt 6 %, Vicatzahl 90°C (Verfahren A, DIN 53 460), Meltindes 4 g/10 min (MFi; 200°C/5 nach DIN 53 735) aufgesiegelt.

2. Bestimmung des Berstdruckes
Unter verschiedenen Siegelbedingungen wurden Verpackungsbecher verschlossen. Zur Bestimmung der Festigkeit der Siegelverbindung wurde ein Berstdrucktest durchgeführt. Dazu wurde mit Hilfe einer geeigneten Vorrichtung durch Druckluft ein meßbarer Überdruck in dem verschlossenen Behälter erzeugt. Die Apparatur besteht im wesentlichen aus einem Manometer mit Schleppanzeiger und einer Druckluftleitung, die mittels einer Gummidichtung an eine im Becher angebrachte Öffnung angeschlossen sind. Der Druck wurde so lange gesteigert, bis sich die Siegelnaht öffnete. Diesen Wert nennt man den Berstdruck.

3. Bestimmung der Fallhöhe
Verpackungsbecher wurden mit Wasser gefüllt und unter verschiedenen Bedingungen versiegelt. Die Fallhöhe in cm bis zum Aufplatzen der Siegelung wurde bestimmt.

4. Bestimmung der Abschälfestigkeit vom Becher
Verpackungsbecher wurden unter verschiedenen Bedingungen versiegelt und mit einer speziell angefertigten Vorrichtung die Abschälfestigkeit der Siegelfolie vom Becher bestimmt. Dazu wurden die Becher auf den Tisch einer Universal-Druck- und Zugprüfmaschine gestellt und festgelegt. Eine vorstehende Ecke des aufgesiegelten Deckels wurde gefaßt und über eine Verlängerung mit der oberen Spannbacke der Prüfmaschine verbunden. Mit einer Beanspruchungsgeschwindigkeit von 10 mm/min wurde die Kraft aufgebaut und der Deckel abgezogen. Festgehalten wurde die Kraft in [N] bis zum ersten Anriß und die Weiterreißkraft an der Siegelnaht in der Deckelmitte.

Für die Herstellung erfindungsgemäßer Formmassen und von Vergleichsproben wurden die nachfolgend beschriebenen Produkte verwendet:

A: ein schlagfestes Polystyrol mit einem Polybutadiengehalt von 8 Gew.-%, Teilchengröße von 0,1 bis 15 μm, mittlere Teilchengröße 4 μm

B: ein lineares Styrol-Butadien-Dreiblock-Polymerisat, hergestellt durch anionische Polymerisation.
Styrolgehalt 28 Gew.-%.
Butadiengehalt 72 Gew.-%
mit scharfem Übergang.
Lösungsviskosität einer 10 % Lösung in Toluol 25 cP
Dichte 0,94 g/cm³

$C_1$: Mineralöl der folgenden Spezifikation (Weißöl, DAB6)
$C_2$: Butylstearat (Dichte d = 0,854, Siedegrenzen bei 20 torr, 220°-255°C)
$C_3$: Di-2-Ethylhexylphthalat (rein 99,7-99,9%, Siedebereich bei 2O torr, 230-233°C)

Beispiele 1 bis 21 und Vergleichsversuche 22 bis 26

Alle Angaben in % beziehen sich auf das Gewicht.

Beispiele 1 bis 21

In einem Taumelmischer wurden bei Raumtemperatur aus den Komponenten A, B und $C_n$ durch ständiges Mischen die in Tabelle 1 angeführten erfindungsgemäßen Formmassen 1 bis 21 gemischt. Die Homogenisierung und Granulierung erfolgte in einem Bus-Kneter. Das Granulat wurde mittels Adapter auf einer Coextrusions-Anlage auf eine Trägerfolie aus einer Mischung von SB-Harz und Styrol-Butadien-Blockcopolymer im Verhältnis 80 : 20 hergestellt. Die Trägerschicht war 250 μm dick, die Siegelschicht 30 μm aufgetragen. Mit den so erhaltenen heißsiegelfähigen Folien wurden durch Tiefziehen Becher versiegelt und an diesen und an der Trägerfolie die in der Tabelle 2 genannten Parameter bestimmt.

Vergleichsversuche 22 bis 26

Für die Vergleichsversuche 22 bis 24 wurden handelsübliche Aluminium-Siegelfolien verwendet und unter verschiedenen, in der Tabelle ange gebenen Bedingungen auf dieselben Verpackungsbecher aufgesiegelt und die verschiedenen Messungen durchgeführt. Die Vergleichsversuche 25 und 26 wurden mit handelsüblichen Siegelfolien aus PVC durchgeführt, die mit einem Siegellack auf Basis von Acrylatharz und PVC beschichtet waren. Auch hier wurden für die Vergleichsversuche dieselben Verpackungsbecher verwendet.

Tabelle 1

| erfindungs-gem. Formmasse | Komponente A Gew.-% A | Komponente B Gew.-% B | Komponente C Gew.-% | | |
|---|---|---|---|---|---|
| | | | $C_1$ | $C_2$ | $C_3$ |
| 1 | 40 | 40 | 20 | | |
| 2 | 40 | 40 | 10 | 10 | |
| 3 | 40 | 40 | | 20 | |
| 4 | 40 | 40 | | | 20 |
| 5 | 50 | 30 | 20 | | |
| 6 | 50 | 30 | | 20 | |
| 7 | 50 | 30 | | | 20 |
| 8 | 50 | 35 | 10 | 5 | |
| 9 | 50 | 35 | | 15 | |
| 10 | 50 | 35 | | | 15 |
| 11 | 50 | 40 | | 10 | |
| 12 | 50 | 40 | | | 10 |
| 13 | 60 | 20 | 20 | | |
| 14 | 60 | 20 | 10 | | 10 |
| 15 | 60 | 20 | 10 | 10 | |
| 16 | 60 | 25 | 10 | 5 | |
| 17 | 60 | 25 | 10 | | 5 |
| 18 | 60 | 25 | | 15 | |
| 19 | 65 | 20 | | 15 | |
| 20 | 30 | 50 | | 20 | |
| 21 | 30 | 55 | | 15 | |

Vergleichsversuche

| 22 | mit Heißsiegellack versehene, handelsübliche Aluminiumfolie |
| 23 | wie 22 |
| 24 | wie 22 |
| 25 | mit Heißsiegellack versehene, handelsübliche PVC-Folie |
| 26 | wie 25 |

Tabelle 2

| Mischung | Siegelbedingungen | | Zeit sec | Berstdruck atü | Fallhöhe cm | Schälfestigkeit Kraft bis zum 1. Anriß (N) | Weiterreißkraft in Deckelmitte (N) |
|---|---|---|---|---|---|---|---|
| | Temperatur °C | Druck atü | | | | | |
| 1a | 200 | 2 | 0,7 | 0,48 | 85 | 17,4 | 1,9 |
| 1b | 200 | 2 | 1,0 | 0,60 | 95 | 19,3 | 2,4 |
| 1c | 200 | 2 | 1,5 | 0,75 | 100 | 20,5 | 2,7 |
| 2a | 200 | 2 | 0,6 | 0,52 | 88 | 9,9 | 0,8 |
| 2b | 200 | 2 | 1,0 | 0,58 | 90 | 15,2 | 1,2 |
| 2c | 200 | 2 | 1,5 | 0,71 | 102 | 16,0 | 1,4 |
| 3 folgende | 190 | 2 | 0,5 | 0,56 | 100 | 19,4 | 1,0 |
| 3 | 190 | 2 | 0,9 | 0,58 | 98 | 20,2 | 1,1 |
| 3 | 190 | 2 | 1,3 | 0,72 | 105 | 23,2 | 1,6 |
| 4 | 190 | 2 | 0,6 | 0,60 | 86 | 20,2 | 1,9 |
| 4 | 190 | 2 | 0,9 | 0,68 | 90 | 22,5 | 3,1 |
| 4 | 190 | 2 | 1,4 | 0,68 | 95 | 26,1 | 3,6 |
| 5 | 200 | 2 | 0,7 | 0,46 | 78 | 17,1 | 1,1 |
| 5 | 200 | 2 | 1,0 | 0,50 | 88 | 16,9 | 1,7 |
| 5 | 200 | 2 | 1,5 | 0,58 | 90 | 22,5 | 1,9 |
| 6 | 190 | 2 | 0,6 | 0,61 | 78 | 12,3 | 1,2 |
| 6 | 190 | 2 | 0,9 | 0,64 | 92 | 18,6 | 1,4 |
| 6 | 190 | 2 | 1,3 | 0,58 | 88 | 19,8 | 2,5 |
| 7 | 210 | 2 | 0,6 | 0,71 | 95 | 18,2 | 1,0 |
| 7 | 210 | 2 | 1,0 | 0,78 | 92 | 24,1 | 2,2 |
| 7 | 210 | 2 | 1,3 | 0,75 | 105 | 26,2 | 2,8 |
| 8 | 200 | 2 | 0,7 | 0,51 | 88 | 20,2 | 1,1 |
| 8 | 200 | 2 | 1,0 | 0,61 | 93 | 22,5 | 1,7 |
| 8 | 200 | 2 | 1,5 | 0,70 | 90 | 24,1 | 2,4 |
| 9 | 200 | 2 | 0,7 | 0,5 | 90 | 19,3 | 1,9 |
| 9 | 200 | 2 | 1,2 | 0,62 | 96 | 21,4 | 1,9 |
| 10 | 210 | 2 | 0,8 | 0,60 | 88 | 18,6 | 1,5 |
| 10 | 210 | 2 | 1,2 | 0,61 | 98 | 19,5 | 2,1 |
| 11 | 220 | 2 | 0,8 | 0,45 | 78 | 18,8 | 1,6 |
| 11 | 220 | 2 | 1,0 | 0,58 | 92 | 20,2 | 1,9 |
| 11 | 220 | 2 | 1,2 | 0,65 | 90 | 19,9 | 1,8 |
| 12 | 210 | 2 | 1,0 | 0,45 | 78 | 22,4 | 1,9 |
| 13 | 210 | 2 | 1,0 | 0,60 | 91 | 19,6 | 2,1 |
| 14 | 200 | 2 | 0,8 | 0,61 | 79 | 17,9 | 2,2 |
| 14 | 200 | 2 | 1,2 | 0,58 | 86 | 19,4 | 2,3 |
| 15 | 200 | 2 | 0,7 | 0,61 | 76 | 21,3 | 2,3 |
| 15 | 200 | 2 | 1,2 | 0,68 | 79 | 22,3 | 2,7 |
| 16 | 210 | 2 | 0,7 | 0,47 | 80 | 16,6 | 1,9 |
| 16 | 210 | 2 | 1,1 | 0,53 | 98 | 19,6 | 1,8 |
| 17 | 210 | 2 | 0,8 | 0,45 | 81 | 18,5 | 2,1 |
| 17 | 210 | 2 | 1,2 | 0,59 | 86 | 20,0 | 1,9 |
| 18 | 200 | 2 | 1,0 | 0,62 | 90 | 19,3 | 1,8 |
| 19 | 200 | 2 | 1,0 | 0,55 | 79 | 19,1 | 1,9 |
| 20 | 200 | 2 | 0,7 | 0,38 | 68 | 16,2 | 2,0 |
| 20 | 200 | 2 | 1,0 | 0,55 | 79 | 19,4 | 2,5 |
| 20 | 200 | 2 | 1,5 | 0,72 | 85 | 23,2 | 3,1 |
| 21 | 200 | 2 | 0,7 | 0,20 | 22 | 8,0 | 0,4 |
| 21 | 200 | 2 | 1,0 | 0,52 | 78 | 17,1 | 1,8 |
| 21 | 200 | 2 | 1,5 | 0,73 | 90 | 23,1 | 2,2 |

EP 0 215 333 B1

| Mischung | Siegelbedingungen | | | Berstdruck atü | Fallhöhe cm | Schälfestigkeit Kraft bis zum 1. Anriß (N) | Weiterreißkraft in Deckelmitte (N) |
|---|---|---|---|---|---|---|---|
| | Temperatur °C | Druck atü | Zeit sec | | | | |
| Vergleichsversuche | | | | | | | |
| 22 | 200 | 2 | 0,5 | 0,45 | 90 | 27,5 | 3,8 |
| 23 | 200 | 2 | 0,75 | 0,55 | 95 | 28,5 | 4,4 |
| 24 | 200 | 2 | 1,0 | 0,43 | 85 | 31,2 | 4,5 |
| 25 | 200 | 2 | 0,8 | 0,47 | 75 | 15,3 | 0,6 |
| 26 | 200 | 2 | 1,2 | 0,75 | 70 | 17,1 | 1,3 |

**Patentansprüche**

1. Siegelfähige thermoplastische Formmasse enthaltend, jeweils bezogen auf die Summe der Bestandteile A, B und C,

A. 20 bis 80 Gew.-% mindestens eines schlagzähen Polystyrolharzes, das zweiphasig aus einer Hartmatrix und einer Weichphase im Gewichtsverhältnis von 60 bis 95 zu 5 bis 40 besteht,

B. 5 bis 70 Gew.-% mindestens eines Blockcopolymeren aus mindestens einem Block eines vinylaromatischen Monomeren und mindestens einem Block eines konjugierten Diens mit 4 oder 5 C-Atomen,

C. 8 bis 30 Gew.-% mindestens eines niedermolekularen Gleitmittels.

2. Formmasse nach Anspruch 1 enthaltend

30 bis 70 Gew.-% der Komponente A,

20 bis 60 Gew.-% der Komponente B und

8 bis 25 Gew.-% der Komponente C.

3. Verwendung einer Formmasse nach Anspruch 1 zur Herstellung von Verbunden mit einer Trägerschicht (Trägerfolie).

4. Heißsiegelfähiger folienförmiger Verbund aus einer Formmasse nach Anspruch 1 und einer Trägerschicht.

**Revendications**

1. Matière à mouler thermoplastique scellable, contenant par rapport à la somme des composants A, B et C:

A. 20 à 80% en poids d'au moins une résine polystyrénique résistant au choc, constituée de deux phases avec un rapport pondéral de la matrice rigide à la phase flexible compris entre 60 à 95 et 5 à 40;

B. 5 à 70% en poids d'au moins un copolymère à blocs composé d'au moins un bloc d'un monomère vinylaromatique et d'au moins un bloc d'un diène conjugué en $C_4$ ou $C_5$;

C. 8 à 30% en poids d'un lubrifiant à bas poids moléculaire.

2. Matière à mouler suivant la revendication 1, composée de

30 à 70% en poids du composant A,

20 à 60% en poids du composant B et

8 à 25% en poids du composant C.

3. Matière à mouler suivant la revendication 1 pour la production d'éléments composites à couche support (feuil support).

4. Elément composite en forme de feuille, scellable à chaud, constitué d'une matière à mouler suivant la revendication 1 et d'une couche support.

**Claims**

1. A sealable thermoplastic molding composition containing, each percentage being based on the sum of the constituents A, B and C,

A. from 20 to 80% by weight of at least one high impact polystyrene resin which consists in two phases of a hard matrix and a soft phase in a weight ratio of from 60 to 95:5 to 40,

B. from 5 to 70% by weight of at least one block copolymer composed of at least one block of an aromatic vinyl monomer and at least one block of a conjugated diene of 4 or 5 carbon atoms, and

C. from 8 to 30% by weight of at least one low molecular weight lubricant.

2. A molding composition as claimed in claim 1, containing

from 30 to 70% by weight of component A,

from 20 to 60% by weight of component B, and

from 8 to 25% by weight of component C.

3. The use of a molding composition as claimed in claim 1 for producing a composite with a support layer (support film).

4. A heat-sealable composite in film form, composed of a molding composition as claimed in claim 1 and a support layer.